(19) Europäisches Patentamt

European Patent Office

Office européen des brevets

(11) **EP 0 603 396 B1**

(12) **EUROPEAN PATENT SPECIFICATION**

(45) Date of publication and mention
of the grant of the patent:
**13.05.1998 Bulletin 1998/20**

(51) Int. Cl.$^6$: **B65H 3/08**, B65H 7/16,
B65H 29/24, B25J 13/08,
B25J 15/06, B25J 19/02

(21) Application number: **92919504.8**

(22) Date of filing: **09.09.1992**

(86) International application number:
**PCT/JP92/01148**

(87) International publication number:
**WO 93/04963 (18.03.1993 Gazette 1993/08)**

(54) **VACUUM-CHUCK ASCERTAINING APPARATUS AND VACUUM-CHUCK ASCERTAINING PRESSURE LEVEL SETTING METHOD**

GERÄT ZUR FUNKTIONSÜBERWACHUNG EINES SAUGGREIFERS UND VERFAHREN ZUR EINSTELLUNG DES DRUCKNIVEAUS FÜR DIE FUNKTIONSÜBERWACHUNG EINES SAUGREIFERS

APPAREIL POUR ASSURER LE SERRAGE D'UNE VENTOUSE ET PROCEDE POUR FIXER LE NIVEAU DE PRESSION ASSURANT LE SERRAGE DE LA VENTOUSE

(84) Designated Contracting States:
**DE**

(30) Priority: **09.09.1991 JP 229218/91**
**10.09.1991 JP 230516/91**
**10.09.1991 JP 230634/91**

(43) Date of publication of application:
**29.06.1994 Bulletin 1994/26**

(73) Proprietor: **SMC KABUSHIKI KAISHA**
**Minato-ku Tokyo 105 (JP)**

(72) Inventors:
• **NAGAI, Shigekazu,**
**SMC K.K.,**
**Tsukuba Gijutsu Center**
**Tsukuba-gun, Ibaraki-ken 300-24 (JP)**

• **NOTOYAMA, Shunichi,**
**SMC KK, Tsukuba Gijutsu Center**
**Tsukuba-gun, Ibaraki-ken 300-24 (JP)**
• **SUGANO, Shigeru,**
**SMC K.K., Tsukuba Gijutsu Center**
**Tsukuba-gun, Ibaraki-ken 300-24 (JP)**

(74) Representative:
**Keil, Rainer A., Dipl.-Phys. Dr.**
**KEIL & SCHAAFHAUSEN**
**Patentanwälte**
**Eysseneckstrasse 31**
**60322 Frankfurt am Main (DE)**

(56) References cited:
**JP-A-60 118 481**      **JP-A-63 139 688**
**JP-B- 3 043 179**

## Description

TECHNICAL FIELD

The present invention relates to a suction confirming apparatus and a pressure sensor attached thereto capable of confirming whether or not a working device such as a suction pad or the like has reliably attracted a workpiece, and to a method of setting suction-confirming pressure values.

BACKGROUND ART

A vacuum sucking method has heretofore been used as a means for effecting processes such as feeding, movement and unloading of an article based on a demand for automatizing such processes. In this case, the inside of a suction pad is kept under a vacuum or negative pressure by either an ejector or a vacuum pump to thereby achieve a desired process. That is, when a work is attracted by the suction pad, the vacuum inside the suction pad increases. Such an increased vacuum is detected by a pressure switch, and the result of this detection is utilized as a signal for a subsequent work feeding step or the like. However, the above method is accompanied by drawbacks in that, since the detected values of negative pressures can differ from each other due to changes in characteristics of the vacuum feed source or a fluid passage thereof, it is difficult to accurately confirm whether or not the suction pad has actually attracted a workpiece. Thus, the suction pad may be enormously operated even when the workpiece is in a non-attracted state.

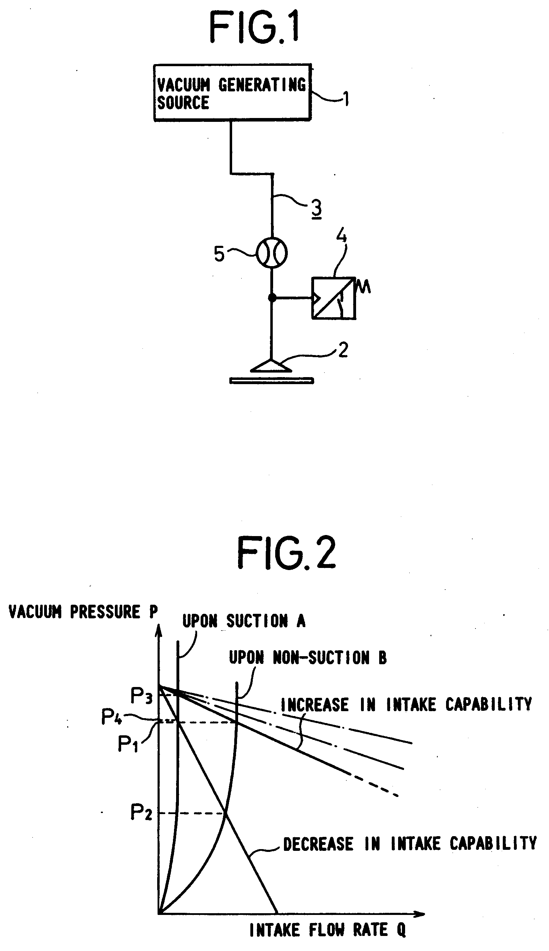

Although various measures have been taken to overcome the above drawbacks, one typical method will be described below with reference to FIGS. 1 and 2.

A pressure switch 4 and a flowmeter 5 are located in a passage 3 for providing communication between a vacuum generating source 1 corresponding to either an ejector or a vacuum pump and a suction pad 2, to thereby confirm whether or not a workpiece has been attracted by the suction pad 2. A signal confirming the attraction of the workpiece is sent to a control device such as a sequencer or the like. As shown in FIG. 2, a work suction confirming process is performed using an intake flow-rate vs. vacuum-pressure characteristic chart obtained between the pressure switch 4 and the flowmeter 5. Here, symbols A and B respectively indicate intake flow-rate vs. vacuum-pressure characteristic curves obtained upon suction and non-suction. When a low powered vacuum generating source is used, a set value used for confirming suction of the workpiece may be set between a pressure value $P_1$ (upon suction) and a pressure value $P_2$ (upon non-suction). On the other hand, when a high powered vacuum generating source is used, a set value for the confirming suction of the workpiece may be set between a pressure value $P_3$ (upon suction) and a pressure value $P_4$ (upon non-suc-

tion). Thus, a detection can be made as to whether or not the suction pad 2 has reliably sucked the workpiece.

In the prior art referred to above, however, when the power of the vacuum generating source increases, an intake flow-rate vs. vacuum-pressure characteristic curve gradually approaches a horizontal position (see the alternate long and short dash lines in FIG. 2). Thus, when the vacuum generating source is high in power, a difference between the pressure values $P_3$ and $P_4$ detected upon suction and non-suction decreases, thereby making it difficult to set the pressure values for suction confirmation.

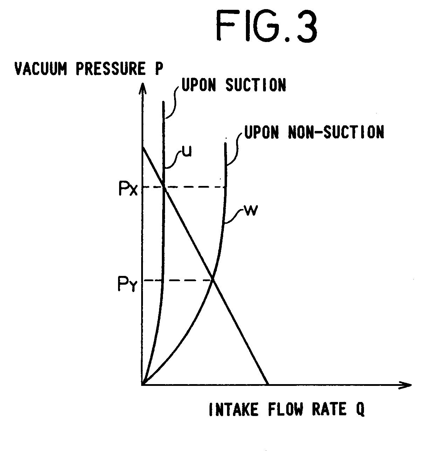

Further, variations in pressure due to work surroundings, secular changes, or clogging developed in a filter, etc. frequently occur in the ejector or the vacuum pump, or in the filter used in connection therewith. Accordingly, variations in pressure can take place due to the above causes depending on the set suction-confirming values which exist between a pressure value $P_X$ and a pressure value $P_Y$ as shown in FIG. 3. As a result, difficulties are encountered when it is decided whether or not the workpiece has been reliably sucked by the suction pad 2.

Further, when a plurality of suction pads 2 communicate with and are connected to either an ejector or a vacuum pump, a variation or reduction occurs in the suction capability of each individual suction pad 2 depending on the capabilities of each other suction pad 2. It is thus difficult to uniformly set pressures for confirming suction with respect to the individual suction pads 2.

Moreover, undesired troubles or inconveniences similar to the above can also occur as a result of variations in pressure in the vacuum supply or due to variations in the electrical control of the power supply.

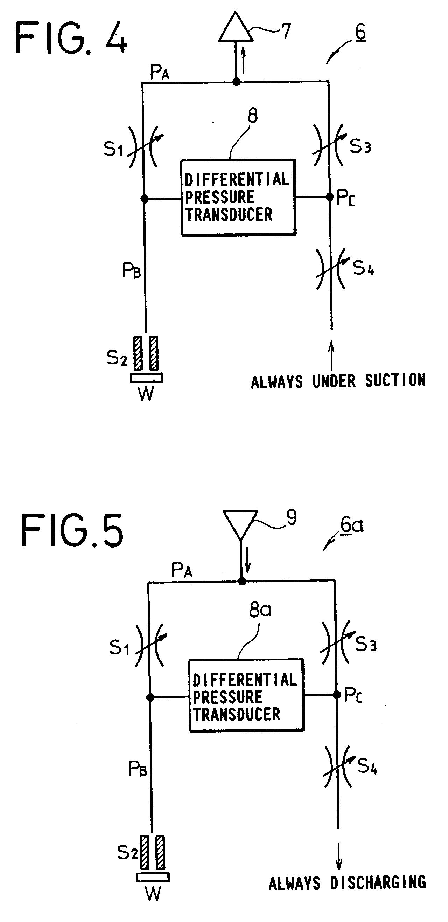

In the prior art as well, a bridge circuit using a pneumatic pressure has been used to detect a fluid pressure. It has been discovered, however, that a bridge circuit of this type involves the following drawbacks, described below. FIG. 4 is a view illustrating the structure of a pneumatic bridge circuit connected to a leading end portion of an arm of a robot, so as to confirm the state of suction of a workpiece or the like by a suction pad used in conveying the workpiece. FIG. 5 is a view illustrating the structure of a pneumatic bridge circuit employed in an air micrometer for measuring a micro distance or the like.

The pneumatic bridge circuit 6 shown in FIG. 4 comprises a variable air throttling valve, i.e., a variable air restrictor $S_1$, a detector nozzle $S_2$, reference variable throttling valves or reference variable restrictors $S_3$ and $S_4$, a negative pressure or vacuum feed source 7 and a differential pressure transducer 8 having a pressure sensor incorporated therein.

On the other hand, the pneumatic bridge circuit 6a shown in FIG. 5 is different from the pneumatic bridge circuit 6 shown in FIG. 4 in that the reference variable restrictor $S_4$ is always connected to the discharge or exhaust side, and a positive pressure feed source 9 is connected thereto as an alternative to the vacuum feed source 7.

In FIGS. 4 and 5, reference symbol W indicates a workpiece, and reference symbols $P_A$, $P_B$ and $P_C$ respectively indicate the fluid pressures at respective positions. Further, reference numeral 8a in FIG. 5 indicates a differential pressure transducer.

A description will now be made of operations of the pneumatic bridge circuits 6 and 6a. The detector nozzle $S_2$ is first held at a position separated from the workpiece W. The reference variable restrictor $S_4$ is then adjusted to keep the pressures applied to each of the differential pressure transducers 8 and 8a in equilibrium, thereby making the pressures $P_B$ and $P_C$ substantially equal to each other (i.e., $P_B \doteqdot P_C$). Next, the detector nozzle $S_2$ is moved so as to approach the workpiece W. Thereafter, an unillustrated pressure sensor senses a pressure ($P_C$ - $P_B$) corresponding to a difference between the pressures $P_B$ and $P_C$ obtained at the time of approach of the workpiece. Further, the differential pressure ($P_C$ - $P_B$) is converted into an electric signal corresponding thereto, which is in turn outputted from each of the differential pressure transducers 8 and 8a.

However, the above prior art is accompanied by a problem in that the respective reference variable restrictors $S_3$ and $S_4$, which serve as resistive elements of the fluid pressure circuit, have non-linear characteristics. Further, the pneumatic circuits on the side of the reference variable restrictors $S_4$, as shown in FIGS. 4 and 5, both draw and discharge fluids at all times, so that fluid energy is used wastefully. When the fluid is drawn or discharged in this way, the amount of available fluid pressure to be used is reduced. Thus, the prior art also involves a problem in that, when a pneumatic source is kept under a vacuum or negative pressure, the workpiece can be dropped due to an insufficiency of suction, whereas when the pneumatic source is kept under a positive pressure, a shortage in pressure can develop.

Further, in this type of device, variable restrictors $S_1$, $S_3$ and $S_4$ must be provided in large numbers. Further, an inconvenience is developed in that clogging tends to occur due to dust or the like in the air; hence, the operation of the device is adversely effected with the passage of time, and the operation for balancing the pressures $P_1$ and $P_2$ becomes cumbersome. When fluid flows in the passage, a pressure loss is suffered and creates a fluid resistance. Thus, when a pressure at a desired position within the fluid passage is converted into an electric signal, such a pressure leads to detection errors.

The document JP-B 3-43 179 discloses a cloth pick up device designed to promote the reduction of conveying time and to simplify its control by connecting a cloth sucker part in a storage part and a sucker part of sampling cloth to a vacuum circuit and deciding whether or not both the sucker parts generate the same negative pressure, in case of the device picking up a cloth from the cloth storage part. In such cloth pick up device sucker pads are brought into contact with a cloth in the uppermost of a cloth storage part while actuating a vacuum circuit and the cloth is sucked by the sucker pads. While a sampling cloth is sucked by the second sucker pad, a negative pressure of the first pad and the second pad is detected by sensors and fed to a comparator. The comparator decides whether both the negative pressures agree or not. When the negative pressures are in no agreement, a movement stop signal is output to a driving control circuit of a conveying arm, while a display or the like is performed.

The document EP 0 269 128 B1 discloses a suction/transfer apparatus for detecting suction and removal of an object to be chucked and reliably transfers the object to be chucked, comprising a pressure sensor for detecting a pressure in a suction part for chucking the object and for generating pressure data corresponding to a detected pressure and delaying means for delaying transmission of the pressure data from the pressure sensor and for generating delayed pressure data and suction/removal detecting means for comparing first level difference data of the delayed pressure data from said delaying means and adjustably-set first level difference data with the pressure data from the pressure sensor to detect suction of the object and for comparing second total data of the pressure data with the pressure sensor and adjustably-set second level difference data with the delayed pressure data from said delaying means to detect removal of the object.

In order to solve such problems, an object of the present invention is to provide a suction confirming apparatus of a type wherein, even when a high powered vacuum feed is used, a difference between pressure values measured by a pressure switch upon suction and non-suction can be sufficiently ensured, so that set pressure values used for confirming suction of a workpiece can be easily established. Accordingly, it is possible to reliably detect whether or not the working device has successfully attracted the workpiece, and to avoid adverse influences on the state of suction of the workpiece by the suction pad upon detection of a fluid pressure.

A further object of the present invention is to provide a method of setting suction-confirming pressure values for confirming attraction of a workpiece, wherein when the flow or flow rate of a fluid changes with respect to predetermined set pressure values upon variations in pressure, new pressures are proportionally set with respect to the set pressure values, thereby making it possible to reliably decide whether a suction process has been performed, even when a change in flow rate of the fluid has taken place.

DISCLOSURE OF THE INVENTION

The suction confirming apparatus according to the present invention comprises a restrictor which is located in a passage provided between a vacuum feed source and a pressure sensor, whereby the pressure sensor is used to confirm the suction of a workpiece by a suction pad or the like. Thus, a pressure corresponding to a difference between vacuum pressures detected by the pressure sensor upon suction and non-suction of the workpiece can be enhanced, and the pressure values used for confirming suction can be easily set. It is also possible to avoid a mistake in judgement as to whether suction or non-suction has taken place, or vice versa.

Further, the provision of a pressure controlling means on the vacuum feed source side makes it possible to avoid making a mistaken decision as to the suction or non-suction of individual workpieces by a plurality of working devices due to variations in vacuum pressures measured when the plurality of working devices are connected to a single vacuum feed source. When a suction confirmation process is executed based on fluid pressures on the upstream and downstream sides of the restrictor, a transducer circuit is provided for connecting the fluid pressures into electric signals. Further, suction confirmation is performed based on a difference between the fluid pressures. Therefore, suction confirmation can be reliably carried out without being influenced by a particular suction state.

Further, the method of setting the suction-confirming pressure values can reliably cope with variations in pressure, for example caused by clogging developed in a filter and the like. Thus, since a detection can be automatically made as to whether or not a workpiece has been completely attracted at all times, it is possible to prevent troubles such as dropping of the workpiece, etc., which occur due to a failure in suction.

## BRIEF DESCRIPTION OF THE DRAWINGS

FIG. 1 is a view for describing a fluid circuit of a suction confirming apparatus according to the prior art;
FIG. 2 is a graph for describing pressure values measured upon suction and non-suction, by the suction confirming apparatus shown in FIG. 1;
FIG. 3 is a characteristic chart for deciding pressure values used for deciding whether suction has occurred, employed in the suction confirming apparatus shown in FIG. 1;
FIG. 4 is a view for describing the structure of a fluid circuit employed in the prior art;
FIG. 5 is a view for describing the structure of another fluid circuit employed in the prior art;
FIG. 6 is a view for describing a fluid circuit constituting a first embodiment of a suction confirming apparatus according to the present invention;
FIG. 7 is a graph for describing characteristic curves of pressure values obtained upon suction and non-suction, by the first embodiment shown in FIG. 6;
FIG. 8 is a view for explaining a fluid circuit constituting a second embodiment of a suction confirming apparatus according to the present invention;
FIG. 9 is a vertical cross-sectional view illustrating a pressure control valve employed in the second embodiment shown in FIG. 8;
FIG. 10 is a graph for describing characteristic curves of pressure values obtained upon suction and non-suction by the second embodiment shown in FIG. 8;
FIG. 11 is a view for explaining another fluid circuit employed in the second embodiment shown in FIG. 8;
FIG. 12 is a partial vertical sectional view of a suction confirming apparatus according to a third embodiment of the present invention;
FIG. 13 is a view schematically illustrating an ejector and a controller, both used for setting suction-confirming pressure values, according to the present invention;
FIG. 14 is a graph schematically illustrating characteristics obtained upon setting a pressure value, and upon changing the pressure value from a first set pressure valve to a second set pressure value;
FIG. 15 is a view for describing the structure of a fluid circuit when kept under a negative pressure, constituting a fifth embodiment of the present invention;
FIG. 16 is a view for describing the structure of the fluid circuit of the fifth embodiment of the present invention, when kept under a positive pressure.
FIG. 17 is a view illustrating the structure of a fluid circuit constituting a sixth embodiment of the present invention;
FIG. 18 is a view illustrating the structure of another fluid circuit employed in the sixth embodiment of the present invention;
FIG. 19 is a view showing the structure of a fluid circuit forming a seventh embodiment of the present invention; and
FIG. 20 is a graph illustrating characteristic curves indicative of flow rate characteristics.

## BEST MODE FOR CARRYING OUT THE INVENTION

Preferred embodiments of an attraction or suction confirming apparatus and a method of setting pressure values for confirming the attraction of a workpiece according to the present invention will hereinafter be described in detail.

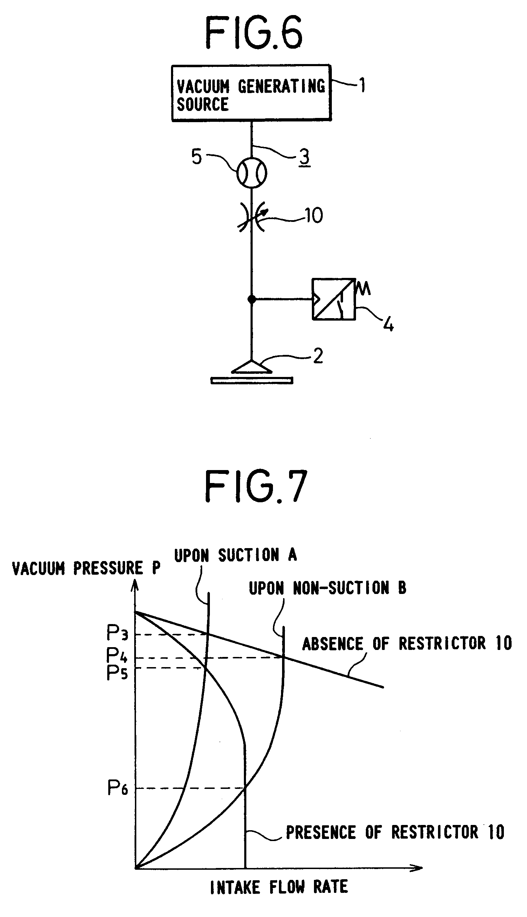

FIG. 6 shows a first embodiment. In the description of the first embodiment, the same structural elements shown in prior art FIG. 1 are identified by like reference numerals and their detailed description will therefore be omitted.

In the present embodiment, a variable restrictor 10 is located in a passage 3 provided between a pressure switch 4 and a flowmeter 5, for causing a vacuum generating source 1 to communicate with a working device such as a suction pad 2 or the like. As easily understood by comparing the pressure values $P_3$ and $P_4$ used in the conventional device shown in FIG. 2 (i.e. which does not include a restrictor), the difference between the pressure values $P_5$ and $P_6$ is enhanced due to the variable restrictor 10, even if the power of the vacuum generating source 1 is large. Accordingly, pressures for confirming attraction or suction of a workpiece can be easily set.

Thus, in the present embodiment, the difference between the pressure values obtained upon suction and non-suction can be enhanced in such a manner that the suction confirming pressures can easily be set even when using a high powered vacuum generating source. Thus, difficulties which have been encountered in the conventional device when using a high powered vacuum source, particularly when confirming attraction of a workpiece, are overcome by the present invention.

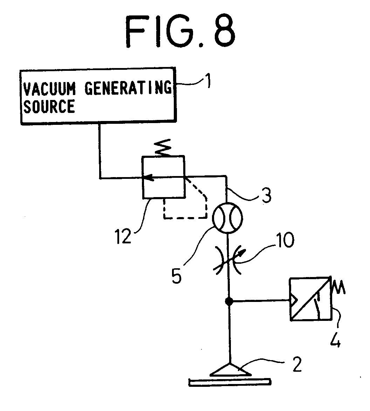

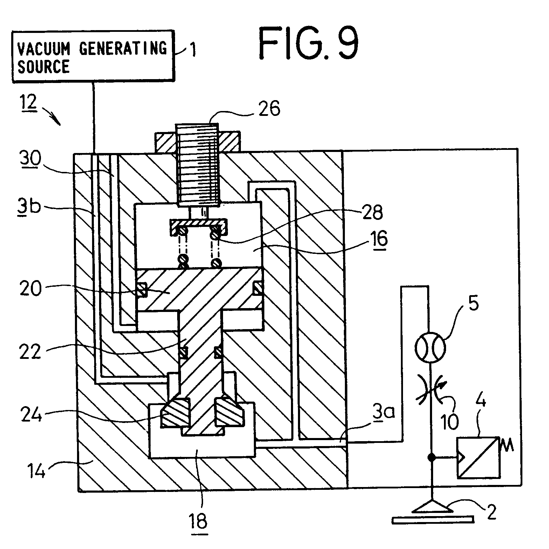

A second embodiment is shown in FIGS. 8 and 9. The second embodiment is substantially identical to the first embodiment, however, a pressure control valve 12 is located in a passage 3 provided between a vacuum generating source 1 and a variable restrictor 10. The pressure control valve 12 has a body 14, a piston chamber 16, and a chamber 18 both defined in tandem in the body 14. A piston 20 is slidably provided within the piston chamber 16. A piston rod 22 of the piston 20 is provided so that a leading end portion thereof extends into the chamber 18. A valve member 24 is fitted on the piston rod 22. A coil spring 28 for increasing and decreasing an elastic or resilient force, which is adjusted by twisting a screw 26, is brought into contact with a large pressure-receiving surface of the piston 20. As shown in the drawing, the piston chamber 16 and the chamber 18 are in communication with a working device such as a suction pad 2 through a passage 3a and the variable restrictor 10, in that order. The piston chamber 16 on the side of the piston rod 22 is opened so as to be exposed to the atmosphere through a passage 30. On the other hand, the chamber 18 communicates with the vacuum generating source 1 through a passage 3b.

As understood from FIGS. 8 and 9, the pressure control valve 12 constructed in the above-described manner is operated as follows. When vacuum pressure is not supplied from the vacuum generating source 1, the piston 20 is moved or displaced downward by the resilient force of the coil spring 28, and the chamber 18 and the vacuum generating source 1 communicate with each other.

When the vacuum generating source 1 is energized, vacuum pressure is supplied to the working device, such as a suction pad 2, through the passages 3b and 3a. Vacuum pressure is also supplied to each of the piston chamber 16 and the chamber 18. The piston 20 is displaced upward due to the difference between the two vacuum pressures supplied to the piston chamber 16 and the chamber 18 to thereby control the vacuum pressure supplied to the working device. Note that the cross-section of the piston chamber 16 is greater than the cross-section of the chamber 18.

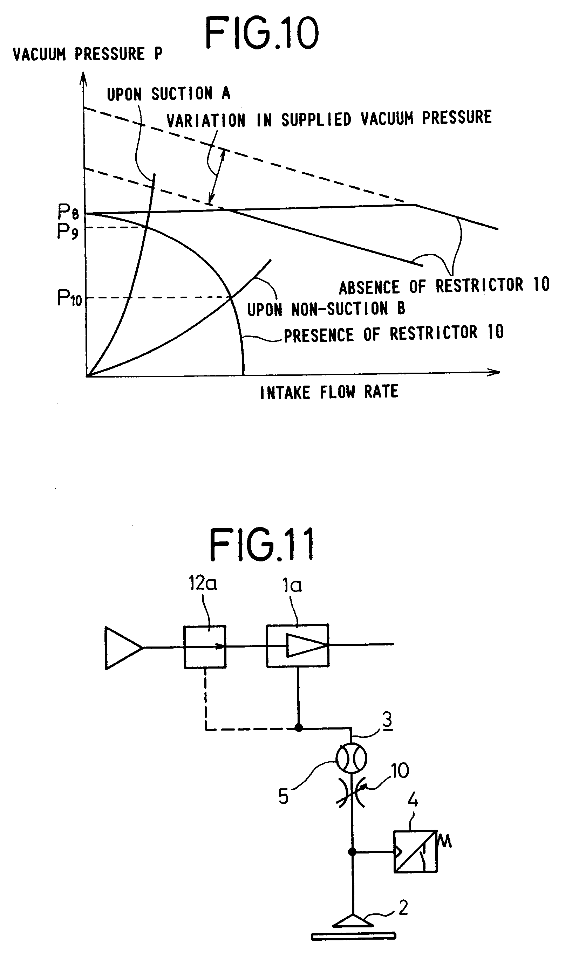

Thus, the vacuum pressure supplied from the vacuum feed source 1 is brought to a constant pressure value $P_8$ and below as shown in FIG. 10. The pressure characteristic obtained under the presence of the variable restrictor 10 does not vary even if the supplied vacuum pressure changes. Further, the variable restrictor 10 enables a significant difference between the pressure values $P_9$ and $P_{10}$, respectively obtained upon attraction and non-attraction. Thus, the pressures used for confirming suction of the workpiece can be easily and reliably set. In the present embodiment as well, the piston 20 is displaced and controlled by the vacuum pressure supplied from the vacuum generating source 1. However, when the vacuum feed source comprises an ejector 1a as shown in FIG. 11, a pressure control valve 12a may be constructed so as to control the pressure of a fluid supplied to the ejector 1a under a vacuum pressure supplied from the vacuum feed source. Further, a vacuum break valve may be provided between the restrictor 10 and the suction pad 2, so that compressed air may be supplied. Moreover, an on-off valve for supplying and cutting off a vacuum may be provided between a passage 3 and the suction pad 2.

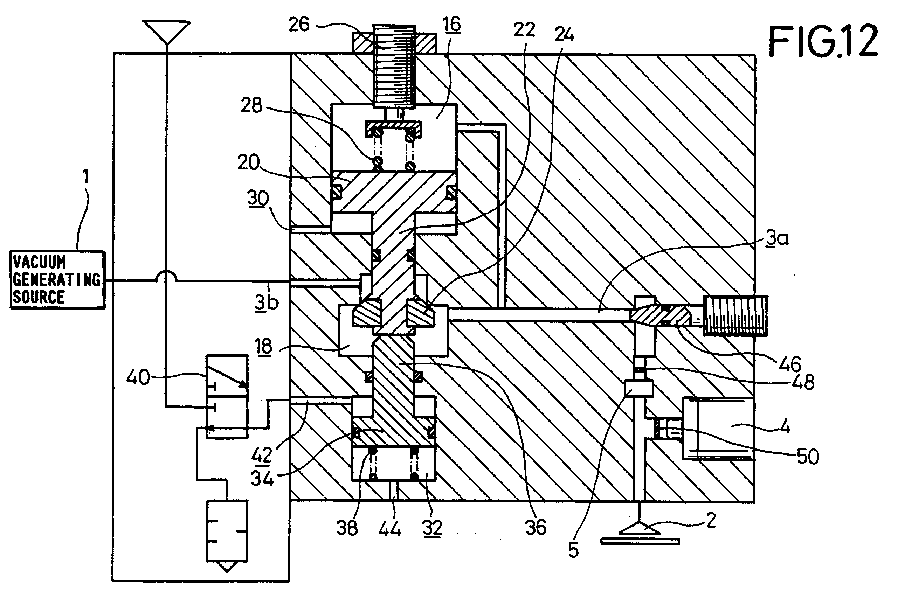

An attraction or suction confirming apparatus of a type wherein a control valve is formed integrally with a pressure control valve for supplying a vacuum pressure, as well as blocking or cutting off its supply, will next be described below as a third embodiment with reference to FIG. 12. Incidentally, the same structural elements as those of the conventional example and the second embodiment are identified by like reference numerals, and their detailed description will therefore be omitted.

A chamber 32 is defined below the chamber 18, and a piston 34 is slidably disposed within the chamber 32. A piston rod 36 of the piston 34 extends into the chamber 18, and is brought into contact with a leading end portion of a piston rod 22 of a piston 20. A coil spring 38 is provided within the chamber 32 for urging the piston 34 upwardly, as shown in the drawing. The piston rod 36 disposed within the chamber 32 communicates with a pilot valve 40 for supplying and discharging a compressed fluid, through a passage 42. On the other hand, a large pressure-receiving surface of the piston 34 disposed within the chamber 32 is exposed to the atmosphere through a passage 44. In the drawing, reference numeral 46 indicates a variable restrictor held in front of a passage 3a. The variable restrictor may preferably have a scale thereon for confirming the degree of restriction. Further, a filter 48 is provided between a suction pad 2 and the variable restrictor 46, and another filter 50 comprised of a hydrophobic element is provided in the vicinity of a pressure switch.

The suction confirming apparatus constructed as described above is operated as follows. When the pilot valve 40 is changed over, a pressurized fluid is supplied to the piston rod 36 provided within the chamber 32 through the passage 42. Further, when the piston 34 is displaced downward by the pressurized fluid, the piston 20 of the pressure control valve 12 is also displaced downward by the resilient force of the coil spring, so as to operate in a manner similar to the second embodiment.

The present embodiment can bring about the same advantages by those obtained in the second embodiment. Further, since the control valve is formed integrally with the pressure control valve, the suction confirming apparatus as a whole can be reduced in size.

The pressure control valve may comprise a pilot-operated pressure valve of a type wherein a vacuum pressure is detected and fed back by a semiconductor pressure sensor, and wherein a force motor using coils, etc. and a nozzle flapper mechanism using pressure elements such as a laminated-bimorph, piezoelectric element, etc. may be used. Further, the pressure control valve may be feed-forward controlled by monitoring the pressure supplied to an ejector and the pressure on the vacuum generation side, and/or may be controlled in combination with the feedback system referred to above. A stepping motor having an epicyclic gear mechanism, such as a harmonic drive or the like, may also be integrally controlled so as to perform the operations of the pressure control valve 12 and the spring.

Further, an effect substantially similar to that described above can also be obtained by monitoring a non-restricted pressure, and setting a vacuum switch, or by automatically varying and controlling set values. A control mechanism for the vacuum feeding device, including an actuator, can also be constructed by attaching a color graphic display, such as a liquid crystal display or the like, to the suction confirming apparatus shown in FIG. 12, so as to monitor the control state of the suction confirming apparatus. In addition, an arithmetic unit such as a one-chip microcomputer or the like, or a timer, etc. may be mounted on the suction confirming apparatus.

A method of setting suction-confirming pressure values will next be described in detail as a fourth embodiment of the present invention.

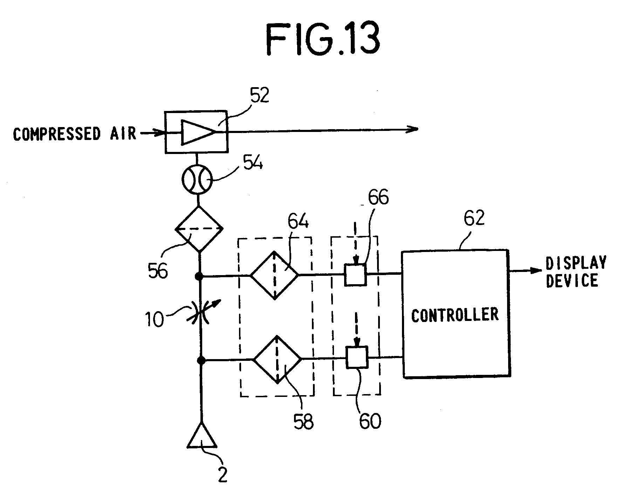

In FIG. 13, reference numeral 52 indicates an ejector which serves as a vacuum generating source. The ejector 52 is supplied with compressed air used as a pressurized fluid. A mass flowmeter 54, capable of measuring a vacuum without being affected by the compressibility of air, and a filter 56 having a hydrophobic element are connected to the ejector 52. The filter 56 is in communication with a suction pad 2 through a variable restrictor 10. Another filter 58, and a sensor 60 for detecting a vacuum pressure supplied from the ejector 52 through the filter 58, are provided on an upstream side of the variable restrictor 10, so that the variable restrictor 10 is interposed between the filters 56 and 58. The output of the sensor 60 is supplied to a controller 62.

On the other hand, a filter 64 separate from the filter 58 is provided on the downstream side of the variable restrictor 10, so as to be connected to a branch line in a manner similar to the filter 58. Further, the filter 64 is connected to a sensor 66. The sensor 66 detects the vacuum pressure and supplies the result of such a detection to the controller 62. The output of the controller 62 is sent to a display device (not shown) or the like. In this case, the filter 64 and the sensor 66 are of circuits provided by way of precaution. Further, the controller 62 may receive signals sent from either one of the sensors 60 and 66 to make a decision as to whether or not the suction has been performed.

Thus, in the above embodiment, the vacuum pressure is first determined as a desired pressure value $P_{11}$. A first intake flow, or flow rate $Q_1$, for obtaining the vacuum pressure $P_{11}$ is then decided based on the characteristics of the ejector 52. Accordingly, a first pressure value $V_1$ is determined or set between a suction characteristic curve $S_1$ and a suction characteristic curve $S_2$. Thereafter, the first vacuum pressure value $P_{11}$ is proportionally divided into two pressure values $\underline{c}$ and $\underline{d}$ based on the first pressure value $V_1$.

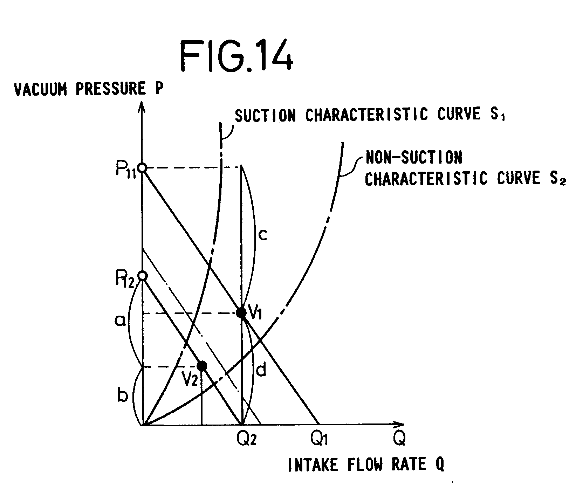

In the event that clogging develops in the filter 56, for example, the following steps are taken. When the first pressure value $V_1$ is in a fixed state, a decision is made as to whether a work is presently being attracted by the suction pad 2 at the first pressure value $V_1$, irrespective of the fact that the air flow has decreased due to clogging. Accordingly, due to the pressure of clogging, a signal indicating that the workpiece is in a non-attracted state is sent to the controller 62, in spite of the fact that the workpiece is actually in an attracted state. When one attempts to decide, based on the first pressure value $V_1$, whether the workpiece has been attracted when the characteristic curve is shifted, as shown by the alternate long and short dash line shown in FIG. 14, the sensor 60 outputs a signal indicating non-attraction of the workpiece even though the workpiece is actually being attracted by the suction pad 2. In order to avoid a mis-judgement, a second pressure value $V_2$ is selected. The second pressure value $V_2$ also exists between the suction characteristic curve $S_1$ and the non-suction characteristic curve $S_2$, and is determined as follows.

When clogging or the like takes place, a second vacuum pressure $P_{12}$ is first decided. A second intake flow or flow rate $Q_2$ for obtaining the second vacuum pressure $P_{12}$ is then determined. Further, pressure values $\underline{a}$ and $\underline{b}$ are decided based on a characteristic determined by the second vacuum pressure $P_{12}$ and the second intake flow rate $Q_2$, so as to correspond to a ratio of c to d, both divided in the above-described manner. In other words, an arithmetic operation is performed based on the following equation:

$$c/d = a/b$$

This operation is performed by an unillustrated CPU provided in the controller 62. The second pressure value $V_2$ is determined to lie within a region defined between the suction characteristic curve $S_1$ and the non-suction characteristic curve $S_2$, based on the result of the above operation. Thus, even if the flow rate varies due to clogging or the like developed in the filter 56, the second pressure value can be set by simply parallel-displacing the characteristic curve, corresponding to the characteristic of the ejector 52. Accordingly, if the value of the a-to-b ratio is set equal to that of the c-to-d ratio, i.e., the former value is set equal to the latter value, then the pressure values can easily be set and adjusted even if clogging is developed in the filter 56.

The present embodiment has been described for the case that a change in a set pressure value is performed when the flow rate of a fluid is changed from $Q_1$ to $Q_2$. It is readily apparent, however, that the present embodiment can also be applied to the case where a change in a set flow value is made when the vacuum pressure P varies.

A fluid circuit constituting a suction confirming apparatus according to the present invention, will next be described below in detail.

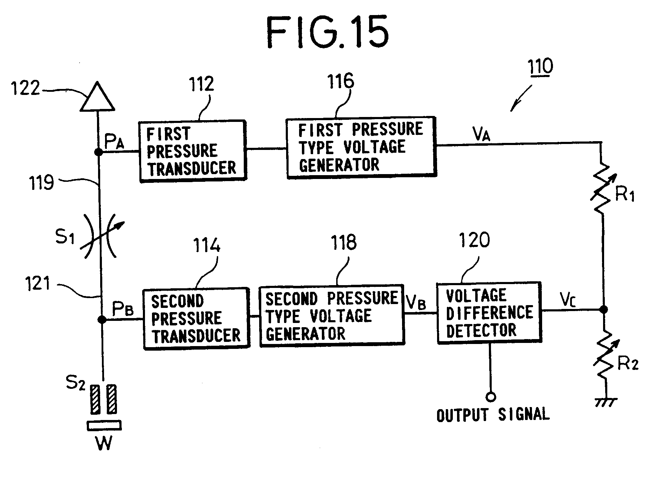

In FIG. 15, a fluid circuit 110 comprises a variable air throttling valve or a variable air restrictor $S_1$, a detector nozzle $S_2$, a first pressure intensifier or transducer 112, a second pressure intensifier or transducer 114, a first pressure-type voltage generator 116, a second pressure-type voltage generator 118, a voltage difference detector 120, variable resistors $R_1$ and $R_2$, and a negative pressure supply or feed source 122. Reference symbols $P_A$ and $P_B$ respectively indicate fluid pressures at individual positions, whereas reference symbols $V_A$, $V_B$ and $V_C$ respectively indicate voltages at individual positions. Further, reference symbol W indicates a workpiece such as an object or article to be fed.

The first and second pressure transducers 112 and 114 respectively detect the pressures of fluids in a first fluid passage 119 and a second fluid passage 121, both passages being located before and behind the variable air restrictor $S_1$. Further, the first and second pressure transducers 112 and 114 respectively generate electric signals corresponding to the detected pressures.

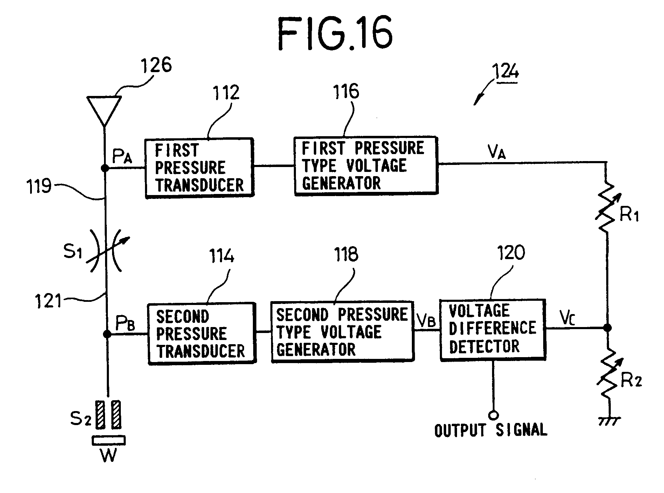

FIG. 16 shows the structure of a fluid circuit 124, having a positive pressure feed source 126 connected thereto as an alternative to the negative pressure feed source 122 shown in FIG. 15. The fluid circuit 124 uses a different air pressure source from the fluid circuit 110, that is, a positive pressure feed source 126 is used as an alternative to the negative pressure feed source 122. However, the fluid circuit 124 is otherwise identical in circuit configuration to the fluid circuit 110, and its detailed description will therefore be omitted.

A first pressure intensifier or transducer 112 converts a pressure $P_A$ of a fluid in a first fluid passage 119, which has passed through a variable air restrictor $S_1$, into an electric signal, and outputs an electric signal corresponding to the pressure $P_A$ therefrom. Similarly, a second pressure transducer 114 converts a pressure $P_B$ of the fluid in a second fluid passage 121 provided prior to the variable air restrictor $S_1$ into an electric signal, and outputs an electric signal corresponding to the pressure $P_B$ therefrom. Incidentally, unillustrated semiconductor pressure sensors are incorporated into the first and second pressure transducers 112 and 114. Next, when the electric signals corresponding to the pressures $P_A$ and $P_B$, which are indicative of the output signals of the first and second pressure transducers 112 and 114, are inputted to pressure-type voltage generators 116 and 118 respectively, the pressure-type voltage generators 116 and 118 generate voltages $V_A$ and $V_B$ corresponding to the pressures $P_A$ and $P_B$ respectively. A variable resistor $R_1$ is adjusted to output a variable or fixed fraction of the generated voltage $V_A$ as a reference voltage $V_C$. Then, a voltage difference detector 120 detects the difference ($V_B - V_C$) between the voltage $V_B$ and the reference voltage $V_C$, and thereby produces an output signal from the voltage difference.

A detector nozzle $S_2$ is brought first into a non-attracted state under the operations referred to above. Further, the variable resistors $R_1$ and $R_2$ are adjusted so as to keep a bridge circuit in equilibrium, thereby making the voltage $V_B$ substantially equal to the voltage $V_C$ (i.e., $V_B \fallingdotseq V_C$). When the nozzle $S_2$ then attracts and holds a workpiece W, a differential pressure ($P_B - P_A$) is developed between the pressures $P_B$ and $P_A$. The differential pressure ($P_B - P_A$) can be detected as a voltage difference ($V_B - V_C$) between the voltage $V_B$ and the reference voltage $V_C$.

Similarly, in the fluid circuit 124 shown in FIG. 16, a differential pressure ($P_B - P_A$) between a pressure $P_B$ of the fluid delivered to the workpiece W from the nozzle $S_2$ and a pressure $P_A$ of the fluid in the first fluid passage 119 is detected as a voltage difference ($V_B - V_C$).

In the present embodiment, only a single variable air restrictor $S_1$, which is difficult to control and expensive, is required. Further, the pressure $P_A$ is detected by a first pressure transducer 112 whose linear characteristic is satisfactory, and is converted into the electric signal. It is therefore possible to provide fluid circuits 110 and 124, each of which is low in cost and capable of detecting pressures with high accuracy.

A description will next be made of a sixth embodiment wherein both a pressure intensifier or transducer and a differential pressure transducer are used in a fluid circuit, and wherein an arithmetic circuit is incorporated in the fluid circuit.

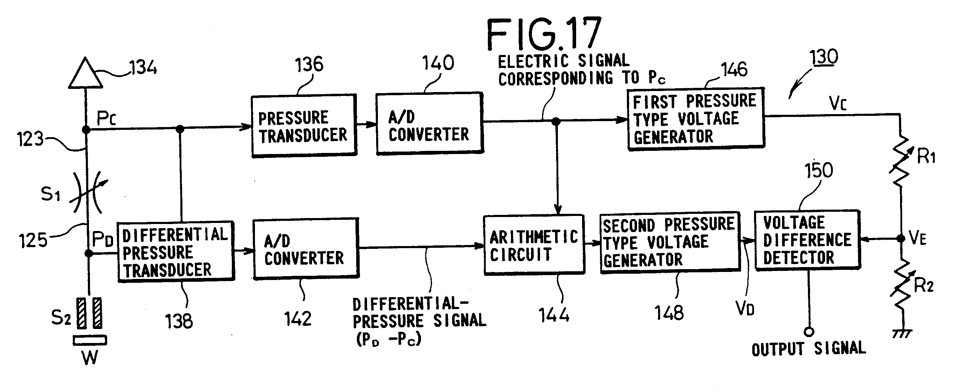

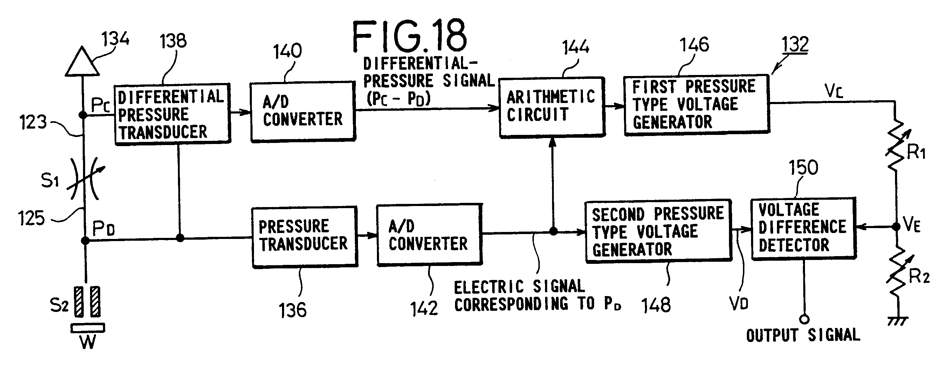

FIGS. 17 and 18, respectively, show the structure of fluid circuits 130 and 132, each of which constitutes the sixth embodiment. Each of the fluid circuits 130 and 132 receives and compares an electric signal (hereinafter called a "$P_C$-corresponding electric signal") corresponding to a pressure $P_C$ in a first fluid passage 123 and an electric signal (hereinafter called a "$P_D$-corresponding electric signal") corresponding to a pressure $P_D$ in a second fluid passage 125, so as to detect a desired pressure. In FIGS. 17 and 18, structural elements depicted in FIG. 17, which are identical to those depicted in FIG. 18, are identified by like reference numerals and shall be described below.

Each of the fluid circuits 130 and 132 shown in FIGS. 17 and 18 comprises a variable air restrictor $S_1$, a detector nozzle $S_2$, a negative-pressure or vacuum source 134, a pressure transducer 136, a differential pressure transducer 138, A/D converters 140 and 142, an arithmetic circuit 144, a first pressure-type voltage generator 146, a second pressure-type voltage generator 148 and a voltage difference detector 150. Incidentally, reference symbols $P_C$ and $P_D$ respectively indicate pressures at individual positions and reference symbols $V_C$, $V_D$ and $V_E$ respectively indicate voltages at individual positions. Further, reference symbols $R_1$ and $R_2$ indicate variable resistors respectively.

Operation of the fluid circuit 130 shown in FIG. 17 will next be described below.

The pressure transducer 136 converts the pressure $P_C$ of a fluid in a first fluid passage 123, which has passed through a variable air restrictor $S_1$, into an electric signal corresponding to the pressure $P_C$, using a semiconductor pressure sensor (not shown) incorporated in the pressure transducer 136. The differential pressure transducer 138 is supplied with a pressure $P_C$ of the fluid in the first fluid passage 123, which has passed through the variable air restrictor $S_1$ and the pressure $P_D$ of the fluid in a second fluid passage 125 provided prior to the variable air restrictor $S_1$. Then, the differential pressure transducer 138 detects both pressures using a semiconductor pressure sensor (not shown) incorporated therein. Further, the differential pressure transducer 138 converts the difference between the pressures $P_C$ and $P_D$ into a differential-pressure signal ($P_D$ - $P_C$) and outputs it as an electric signal therefrom.

Incidentally, each of the A/D converters 140 and 142 is used to convert an analog signal, outputted respectively from the pressure transducer 136 and the differential pressure transducer 138, into a digital signal. The digitized electric signal of the pressure $P_C$ (hereinafter called a "$P_C$" as needed) and the differential-pressure signal ($P_D$ - $P_C$) are inputted to the arithmetic circuit 144. The arithmetic circuit 144 performs an arithmetic operation, $P_C + (P_D - P_C)$, in response to the input signal so that an electric signal corresponding to the pressure $P_D$ can be extracted from the output side of the arithmetic circuit 144.

Errors attributable to variations in pressure of the vacuum source 134 are not produced in such an extracted electric signal corresponding to the pressure $P_D$, as compared with an electric signal obtained by directly converting the pressure $P_D$ in the second fluid passage 125. On the other hand, the fluid has a viscosity, and hence a frictional loss is developed in the flow of the fluid in each fluid passage due to the viscosity. This frictional loss serves as a fluid resistance in each fluid passage, and thereby may lead to errors. In the fluid circuit 130 employed in the present embodiment, the differential-pressure signal ($P_D$ - $P_C$) is first extracted from the output side of the differential pressure transducer 138 and then converted into an electric signal. Further, the arithmetic circuit 144 performs an arithmetical operation, $P_C + (P_D - P_C)$, so as to extract an electric signal corresponding to the pressure $P_D$. It is therefore possible to output an error-free value from the output side of the arithmetic circuit 144.

The electric signal output from the arithmetic circuit, and corresponding to the pressure $P_C$, is inputted to the first pressure-type voltage generator 146. Similarly, the electric signal corresponding to the pressure $P_D$ is inputted to the second pressure-type voltage generator 148. The first and second pressure-type voltage generators 146 and 148 generate voltages $V_C$ and $V_D$, corresponding to the pressures $P_C$ and $P_D$ respectively. The variable resistors $R_1$ and $R_2$ are adjusted to output a fixed fraction of the voltage $V_C$ as a reference voltage $V_E$. The voltage difference detector 150 detects a difference ($V_D$ - $V_E$) between the voltage $V_D$ and the reference voltage $V_E$, so as to produce an output signal.

Under the operations referred to above, the variable resistors $R_1$ and $R_2$ are first adjusted in a state in which the workpiece W is separated from the detector nozzle $S_2$, so as to balance a bridge circuit. Accordingly, the voltage $V_D$ is made substantially equal to the voltage $V_E$ (i.e., $V_B \fallingdotseq V_E$). When the workpiece W is then attracted by the detector nozzle $S_2$, a differential pressure ($P_D$ - $P_C$) is produced between the pressures $P_C$ and $P_D$. The resultant differential pressure ($P_D$ - $P_C$) can then be detected as a voltage difference ($V_D$ - $V_E$) produced between the voltage $V_D$ and the reference voltage $V_E$.

The fluid circuit 132 shown in FIG. 18 is operated in a manner similar to the fluid circuit 130. That is, a differential pressure signal ($P_C$ - $P_D$) and an electric signal corresponding to the pressure $P_D$ are inputted to the arithmetic circuit 144. Further, the arithmetic circuit 144 performs an arithmetical operation, $P_D + (P_C - P_D)$. As a result, an electric signal corresponding to the pressure $P_C$ can be extracted from the output side of the arithmetic circuit 144, and an electric signal corresponding to the pressure $P_D$ can be produced from the other side.

The so-produced electric signals, corresponding to the pressures $P_C$ and $P_D$ respectively, are inputted to corresponding first and second pressure-type voltage generators 146 and 148. Employing an operation similar to that of the fluid circuit shown in FIG. 17, the voltage difference detector 150 then detects an output signal as a difference ($V_D$ - $V_E$) between a voltage $V_D$ and a reference voltage $V_E$.

Incidentally, the electric signal corresponding to the pressure $P_C$, which is outputted from the arithmetic circuit 144, is produced as an error-free value, so as to correspond exactly to the pressure $P_C$ in the fluid passage 123, in a manner similar to FIG. 17.

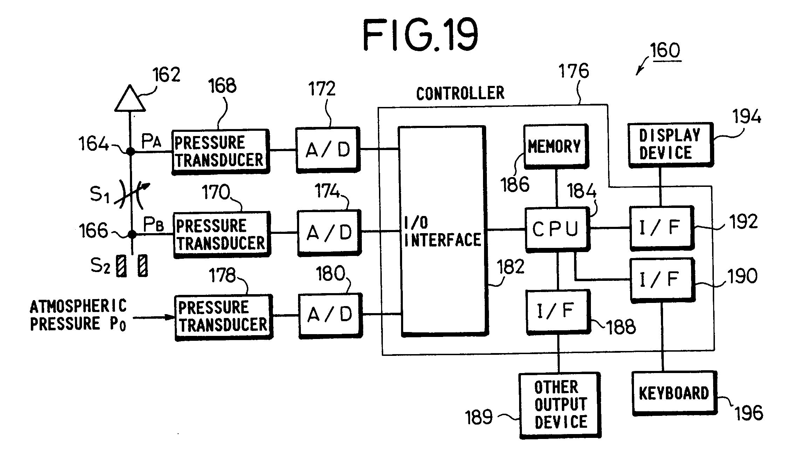

A fluid circuit, constituting a seventh embodiment of the present invention, will next be shown in FIG. 19.

In the fluid circuit 160 which forms the present embodiment, pressure transducers 168 and 170 and A/D converters 172 and 174 are respectively connected to a fluid passage 164 provided between a variable air restrictor $S_1$ and a pressure source 162, and a fluid passage 166 provided between the variable air restrictor $S_1$ and a detector nozzle $S_2$. Further, output terminals of the A/D converters 172 and 174 are respectively electrically connected to a controller 176. A pressure transducer 178 exposed to atmospheric pressure is connected to the controller 176 through an A/D converter 180. An I/O interface 182 is electrically connected to the output terminals of the A/D converters 172, 174 and 180. Further, a CPU 184, which serves as an arithmetic circuit, is electrically connected to an output terminal of the I/O interface 182. Moreover, a memory 186 for storing a voltage/pressure conversion table therein as data and I/Fs 188, 190 and 192 are electrically connected to the CPU 184. A display device 194 is electrically connected to an output terminal of the I/F 192, and a keyboard 196 is electrically connected to the I/F 190. An output device 189 for outputting sound and light, or for receiving a signal therein to serve other purposes, is electrically connected to the I/F 188.

The fluid circuit 160 according to the present embodiment is constructed as described above. A description will next be made of the operation of the fluid circuit 160.

First of all, a pressure $P_A$ of a fluid prior to passing through the variable air restrictor $S_1$ and a pressure $P_B$ of the fluid prior to passing through the variable air restrictor $S_1$, are supplied to the A/D converters 172 and 174 through the pressure transducers 168 and 170 respectively. That is, the pressures $P_A$ and $P_B$ of the respective fluids are converted into analog electric signals by the pressure transducers 168 and 170 respectively. The electric signals are thereafter converted into digital electric signals by the A/D converters 172 and 174, respectively, and inputted to the I/O interface 182 of the controller 176. Similarly, an atmospheric pressure $P_0$ is also converted into an electric signal by the pressure transducer 178, and inputted to the I/O interface 182 through the A/D converter 180. In the CPU 184 of the controller 176, the respective electric signals are converted into corresponding pressure values, based on a voltage/pressure conversion table stored in the memory 186.

On the other hand, the CPU 184 sets values of $S_3$ and $S_4$ so that the equation $P_A \times S_4 = P_B \times S_3$ is established, to thereby hold a virtual bridge circuit in equilibrium, in an initial state in which the workpiece W is not attracted. Instructions for setting the values of $S_3$ and $S_4$ are executed through the keyboard 196.

Next, the CPU 184 causes the detector nozzle $S_2$ to attract the workpiece W and performs arithmetical operations on the pressure $P_A$ of the fluid which has passed through the variable air restrictor $S_1$, the pressure $P_B$ of the fluid prior to passing through the variable air restrictor $S_1$, the atmospheric pressure $P_0$, and the set values of $S_3$ and $S_4$, all of which are obtained upon attracting the workpiece W.

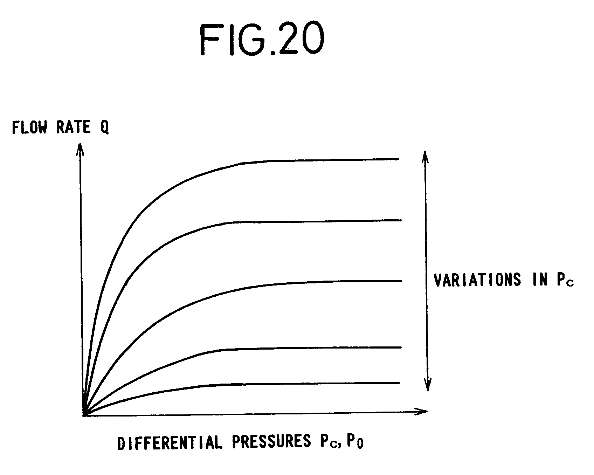

More specifically, a flow or flow rate Q is determined from a differential-pressure flow-rate characteristic curve (see FIG. 20) indicative of $Q = f(P_C, P_0, S_4)$, and based on the respective input pressures $P_A$, $P_B$ and $P_0$. The differential-pressure flow-rate characteristic curve is a function of the atmospheric pressure $P_0$ and the flow rate taken at respective values of $P_C$, each of which represents a function $g(P_A, P_B)$ consisting of $P_A$ and $P_B$. Functions f and g are determined based on characteristics of the variable air restrictor $S_1$ and the detector nozzle $S_2$. After a flow rate $Q_1$ has been set in this way, the flow rate $Q_1$ is substituted in the equation $Q = f(P_A, P_C, S_3)$ to thereby set the value of $P_C$. The so-set value of $P_C$ is likewise substituted in the equation $Q = f(P_C, P_0, S_4)$. Thus, a flow rate Q that satisfies both equations can be obtained by repeating the above process. The flow rate Q indicates the quantity of fluid which passes through the variable air restrictor $S_1$. Accordingly, a confirmation can be made, based on the value of the flow rate Q, determined as a result of above operation, as to whether or not the workpiece W has been reliably attracted. Further, a decision can be made, based on the flow rate Q, as to whether or not the workpiece W presently remains attracted. Thus, an output signal, a signal indicative of an improper pressure condition, a pressure display signal, a pressure status signal, etc. can be outputted through the I/F 192 as a result of the decision. When the flow rate Q has been determined in the above-described manner, a highly accurate control can be performed while taking into consideration the non-linear characteristics of the detector nozzle $S_2$.

INDUSTRIAL APPLICABILITY

When a suction confirming apparatus and a method of setting suction-confirming pressure values, according to the present invention are used in a robot or the like employed in an automated production line for confirming whether a workpiece has been attracted by a suction pad, the suction confirming apparatus and the method therefor are adjusted to change various setting conditions for confirming the attraction of the workpiece.

**Claims**

1.  A suction confirming apparatus comprising:

    a passage (3; 119, 121; 123, 125; 164, 168) for enabling a vacuum feed source (1; 122; 126; 134; 162) to communicate with a working device (2; $S_2$), for attracting a workpiece under suction;

a pressure sensor (4; 112, 114; 136, 138; 168, 170) disposed in facing relationship to said passage, and provided to confirm a state of attraction of the workpiece by said working device;
**characterized by** a restrictor (10, $S_1$) disposed in said passage between said vacuum feed source and said pressure sensor.

2. A suction confirming apparatus as claimed in claim 1, further comprising a pressure control mechanism (12; 46; 120; 144, 150; 176, 178) for controlling a vacuum supplied to said working device, so that said vacuum attains a predetermined value.

3. A suction confirming apparatus as claimed in claim 2, wherein a directional control valve for supplying and cutting off said vacuum and said pressure control mechanism are formed as an integral unit.

4. A suction confirming apparatus as claimed in claim 2 or 3, wherein said vacuum feed source comprises an ejector (52) and said pressure control mechanism comprises means for controlling a pressure of a pressurized fluid supplied to said ejector.

5. A suction confirming apparatus as claimed in claim 1, wherein said restrictor comprises a throttling valve ($S_1$) disposed in said passage thereby defining a first fluid passage (119) on one side of said throttling valve ($S_1$) and a second fluid passage (120) on another side of said throttling valve ($S_1$), said pressure sensor comprising:

a first transducing circuit (112) for converting a pressure of a fluid in said first fluid passage (119) into an electric signal;

a second transducing circuit (114) for converting a pressure of the fluid in said second fluid passage (121) into an electric signal; and

a deviation output circuit (120) electrically connected to outputs of said first and second transducing circuits (112, 114), so as to output a deviation between an output signal A of said first transducing circuit (112) and an output signal B of said second transducing circuit (114).

6. A suction confirming apparatus as claimed in claim 5, wherein said deviation output circuit (120) has an impedance circuit comprising variable resistors $R_1$ and $R_2$ for outputting a fixed fraction of either said output signal A or said output signal B.

7. A suction confirming apparatus as claimed in claim 1, wherein said restrictor comprises a throttling valve ($S_1$) disposed in said passage thereby defining a first fluid passage (123) on one side of said throttling valve ($S_1$) and a second fluid passage (125) on another side of said throttling valve ($S_1$), said pressure sensor comprising:

a first transducing circuit (136) for converting a pressure of a fluid in said first fluid passage (123) into an electric signal;

a second transducing circuit (138) for converting a pressure corresponding to a difference between a pressure A in said first fluid passage (123) and a pressure B in said second fluid passage (125) into an electric signal;

an arithmetic circuit (144) for receiving an output signal $P_A$ of said first transducing circuit (136) and an output signal ($P_B$ - $P_A$) of said second transducing circuit (138) therein and performing an arithmetical operation on $P_A + (P_B - P_A)$ ; and

a deviation output circuit (150) electrically connected to outputs of said first transducing circuit (136) and said arithmetic circuit (144), so as to output a deviation between the output signal $P_A$ of said first transducing circuit (136) and the output signal $P_B$ of said arithmetic circuit (144).

8. A suction confirming apparatus as claimed in claim 7, wherein said first fluid passage (123) communicates with a vacuum generating source (134) and said second fluid passage (125) communicates with a suction device ($S_2$).

9. A suction confirming apparatus as claimed in claim 7, wherein said first fluid passage communicates (123) with a suction device ($S_2$) and said second fluid passage communicates with a vacuum generating source (134).

10. A suction confirming apparatus as claimed in claim 1, wherein said restrictor comprises a throttling valve ($S_1$) disposed in said passage thereby defining a first fluid passage (164) on one side of said throttling valve ($S_1$) and a second fluid passage (166) on another side of said throttling valve ($S_1$), said pressure sensor comprising:

a first transducing circuit (168) for converting a pressure of a fluid in said first fluid passage (164) into an electric signal;

a second transducing circuit (170) for converting a pressure of the fluid in said second fluid passage (166) into an electric signal;

a third transducing circuit (178) for converting an atmospheric pressure into an electric signal; and

arithmetic means (176) electrically connected to outputs of said first through third transducing circuits (168, 170, 178), for receiving an output signal A of said first transducing circuit (168), an output signal B of said second transducing circuit (170) and an output signal C of said third transducing circuit (178) therein and performing an arithmetical operation on a flow rate of the fluid passing through said throttling valve $(S_1)$, based on preset flow rate characteristics of said throttling valve $(S_1)$.

11. A method of setting suction-confirming pressure values, comprising the following steps of:

deciding, based on a first flow rate $Q_1$ of a fluid and a first vacuum pressure $P_1$ obtained from said first flow rate $Q_1$, a first pressure value $V_1$ for determining whether a sucked state has occurred;
dividing said first vacuum pressure $P_1$ into two values of c and d by said first pressure value $V_1$;
deciding a second vacuum pressure $P_2$ based on a second flow rate $Q_2$ obtained after said first flow rate $Q_1$ has been changed to said second flow rate $Q_2$; and
deciding a second pressure value $V_2$ based on a ratio of c to d both obtained in said division step.

12. A method of setting suction-confirming pressure values, comprising the following steps of:

deciding, based on a first vacuum pressure $P_1$ of a fluid and a first flow rate $Q_1$ obtained from said first vacuum pressure $P_1$, a first pressure value $V_1$ for determining whether a sucked state has occurred;
dividing said first flow rate $Q_1$ into two values of c and d by said first pressure value $V_1$;
deciding a second flow rate $Q_2$ based on a second vacuum pressure $P_2$ obtained after said first vacuum pressure $P_1$ has been changed to said second vacuum pressure $P_2$; and
deciding a second pressure value $V_2$ based on a ratio of c to d both obtained in said division step.

13. A method as claimed in Claim 11 or 12, wherein said first pressure value $V_1$ and said second pressure value $V_2$ are determined between a suction

characteristic curve $S_1$ and a non-suction characteristic curve $S_2$.

**Patentansprüche**

1. Saugbestätigungsvorrichtung mit:

einem Durchgang (3; 119, 121; 123, 125; 164, 168), der es einer Vakuumzufuhrquelle (1; 122; 126; 134; 162) ermöglicht, mit einer Arbeitsvorrichtung (2; $S_2$) in Verbindung zu treten, um ein Werkstück durch Saugen anzuziehen;

einem Drucksensor (4; 112, 114; 136, 138; 168, 170), der dem Durchgang zugewandt angeordnet und dazu vorgesehen ist, einen Anziehungszustand des Werkstücks durch die Arbeitsvorrichtung zu bestätigen;
**gekennzeichnet durch** einen Begrenzer (10, $S_1$), der in dem Durchgang zwischen der Vakuumzufuhrquelle und dem Drucksensor angeordnet ist.

2. Saugbestätigungsvorrichtung nach Anspruch 1, außerdem mit einem Druckkontrollmechanismus (12; 46; 120; 144, 150; 176, 178) zur Kontrolle eines Vakuums, das der Arbeitsvorrichtung zugeführt wird, so daß das Vakuum einen festgelegten Wert erreicht.

3. Saugbestätigungsvorrichtung nach Anspruch 2, wobei ein Richtungskontrollventil für die Zufuhr und das Absperren des Vakuums und der Druckkontrollmechanismus als einstückige Einheit ausgebildet sind.

4. Saugbestätigungsvorrichtung nach Anspruch 2 oder 3, wobei die Vakuumzufuhrquelle einen Ejektor (52) aufweist und wobei der Druckkontrollmechanismus eine Einrichtung zur Kontrolle eines Druckes eines dem Ejektor zugeführten unter Druck stehenden Fluides aufweist.

5. Saugbestätigungsvorrichtung nach Anspruch 1, wobei der Begrenzer ein Drosselventil $(S_1)$ aufweist, das in dem Durchgang angeordnet ist und dadurch einen ersten Fluiddurchgang (119) auf einer Seite des Drosselventils $(S_1)$ und einen zweiten Fluiddurchgang (120) auf einer anderen Seite des Drosselventils $(S_1)$ festlegt, wobei der Drucksensor folgende Elemente aufweist:

einen ersten Transducer-Schaltkreis (112) für das Umwandeln eines Druckes eines Fluids in dem ersten Fluiddurchgang (119) in ein elektrisches Signal;

einen zweiten Transducer-Schaltkreis (114) für das Umwandeln eines Druckes des Fluids in dem zweiten Fluiddurchgang (121) in ein elektrisches Signal; und

einen Abweichungsausgabeschaltkreis (120), der elektrisch mit den Ausgängen der ersten und zweiten Transducer-Schaltkreise (112, 114) verbunden ist, um eine Abweichung zwischen einem Ausgangssignal A des ersten Transducer-Schaltkreises (112) und einem Ausgangssignal B des zweiten Transducer-Schaltkreises (114) auszugeben.

6. Saugbestätigungsvorrichtung nach Anspruch 5, wobei der Abweichungsausgabeschaltkreis (120) einen Impedanz-Schaltkreis aufweist, der variable Widerstände $R_1$ und $R_2$ zur Ausgabe eines festen Bruchteils entweder des Ausgangssignals A oder des Ausgangssignals B aufweist.

7. Saugbestätigungsvorrichtung nach Anspruch 1, wobei der Begrenzer ein Drosselventil ($S_1$) aufweist, das in dem Durchgang angeordnet ist und dadurch einen ersten Fluiddurchgang (123) auf einer Seite des Drosselventils ($S_1$) und einen zweiten Fluiddurchgang (125) auf einer anderen Seite des Drosselventils ($S_1$) festlegt, wobei der Drucksensor folgende Elemente aufweist:

einen ersten Transducer-Schaltkreis (136) zum Umwandeln eines Druckes eines Fluids in dem ersten Fluiddurchgang (123) in ein elektrisches Signal;

einen zweiten Transducer-Schaltkreis (138) zum Umwandeln eines Druckes, der einer Differenz zwischen einem Druck A in dem ersten Fluiddurchgang (123) und einem Druck B in dem zweiten Fluiddurchgang (125) entspricht, in ein elektrisches Signal;

einen arithmetischen Schaltkreis (144) für den Empfang eines Ausgangssignals $P_A$ des ersten Transducer-Schaltkreises (136) und eines Ausgangssignals ($P_B$ - $P_A$) des zweiten Transducer-Schaltkreises (138) und für die Durchführung einer arithmetischen Operation an $P_A + (P_B - P_A)$ ; und

einen Abweichungsausgabeschaltkreis (150), der elektrisch mit den Ausgängen des ersten Transducer-Schaltkreises (136) und des arithmetischen Schaltkreises (144) verbunden ist, um eine Abweichung zwischen dem Ausgangssignal $P_A$ des ersten Transducer-Schaltkreises (136) und dem Ausgangssignal $P_B$ des arithmetischen Schaltkreises (144) auszugeben.

8. Saugbestätigungsvorrichtung nach Anspruch 7, wobei der erste Fluiddurchgang ( 123) mit einer Vakuumerzeugungsquelle (134) in Verbindung steht und wobei der zweite Fluiddurchgang (125) mit einer Saugvorrichtung ($S_2$) in Verbindung steht.

9. Saugbestätigungsvorrichtung nach Anspruch 7, wobei der erste Fluiddurchgang (123) mit einer Saugvorrichtung ($S_2$) in Verbindung steht und wobei der zweite Fluiddurchgang mit einer Vakuumerzeugungsquelle (134) in Verbindung steht.

10. Saugbestätigungsvorrichtung nach Anspruch 1, wobei der Begrenzer ein Drosselventil ($S_1$) aufweist, das in dem Durchgang angeordnet ist und dadurch einen ersten Fluiddurchgang (164) auf einer Seite des Drosselventils ($S_1$) und einen zweiten Fluiddurchgang (166) auf einer anderen Seite des Drosselventils ($S_1$) festlegt, wobei der Drucksensor folgende Elemente aufweist:

einen ersten Transducer-Schaltkreis (168) zum Umwandeln eines Druckes eines Fluids in dem ersten Fluiddurchgang (164) in ein elektrisches Signal;

einen zweiten Transducer-Schaltkreis (170) zum Umwandeln eines Druckes des Fluids in dem zweiten Fluiddurchgang (166) in ein elektrisches Signal;

einen dritten Transducer-Schaltkreis (178) zum Umwandeln eines Atmosphärendruckes in ein elektrisches Signal; und

eine arithmetische Einrichtung (176), die elektrisch mit Ausgängen der ersten bis dritten Transducer-Schaltkreise (168, 170, 178) verbunden ist, um ein Ausgangssignal A des ersten Transducer-Schaltkreises (168), ein Ausgangssignal B des zweiten Transducer-Schaltkreises (170) und ein Ausgangssignal C des dritten Transducer-Schaltkreises (178) zu empfangen und auf der Basis voreingestellter Durchflußratencharakteristiken des Drosselventils ($S_1$) eine arithmetische Operation an einer Durchflußrate des das Drosselventil ($S_1$) durchtretenden Fluids durchzuführen.

11. Verfahren zum Einstellen von Saugbestätigungsdruckwerten mit den folgenden Schritten:

auf der Basis einer ersten Durchflußrate $Q_1$ eines Fluids und eines ersten Vakuumdruckes $P_1$, der von der ersten Durchflußrate $Q_1$ erhalten wird, wird ein erster Druckwert $V_1$ zum Bestimmen, ob ein Saugzustand aufgetreten ist, festgelegt;

der erste Vakuumdruck $P_1$ wird durch den ersten Druckwert $V_1$ in zwei Werte c und d geteilt;

ein zweiter Vakuumdruck $P_2$ wird auf der Basis einer zweiten Durchflußrate $Q_2$, die erhalten wird, nachdem die erste Durchflußrate $Q_1$ zu der zweiten Durchflußrate $Q_2$ geändert wurde, festgelegt; und

ein zweiter Druckwert $V_2$ wird auf der Basis eines Verhältnisses von c zu d, die beide durch den Teilungsschritt erhalten werden, festgelegt.

12. Verfahren zum Einstellen von Saugbestätigungsdruckwerten mit den folgenden Schritten:

auf der Basis eines ersten Druckwertes $P_1$ eines Fluids und einer ersten Durchflußrate $Q_1$, die durch den ersten Druckwert $P_1$ erhalten wird, wird ein erster Druckwert $V_1$ zum Bestimmen, ob ein Saugzustand aufgetreten ist, festgelegt;

die erste Durchflußrate $Q_1$ wird durch den ersten Druckwert $V_1$ in zwei Werte c und d geteilt;

eine zweite Durchflußrate $Q_2$ wird auf der Basis eines zweiten Vakuumwertes $P_2$, der erhalten wird, nachdem der erste Vakuumdruck $P_1$ auf den zweiten Vakuumdruck $P_2$ geändert wurde, festgelegt; und

ein zweiter Druckwert $V_2$ wird auf der Basis eines Verhält nisses von c zu d, die beide durch den Teilungsschritt erhalten wurden, festgelegt.

13. Verfahren nach Anspruch 11 oder 12, wobei der erste Druckwert $V_1$ und der zweite Druckwert $V_2$ zwischen einer Saugcharakteristikkurve $S_1$ und einer Nichtsaugcharakteristikkurve $S_2$ festgelegt werden.

**Revendications**

1. Dispositif servant à assurer une aspiration, qui comprend :

- un passage (3; 119, 121 ; 123, 125 ; 164, 168) qui permet à une source de vide (1 ; 122 ; 126 ; 134 ; 162) de communiquer avec un dispositif de travail (2 ; $S_2$) afin d'attirer une pièce par aspiration,
- un capteur de pression (4 ; 112, 114 ; 136, 138 ; 168, 170) placé en face dudit passage et servant à confirmer l'état d'attraction de la pièce par ledit dispositif de travail, caractérisé par un dispositif de limitation (10, $S_1$) placé dans ledit passage entre ladite source de vide et ledit capteur de pression.

2. Dispositif servant à assurer une aspiration selon la revendication 1, comprenant en outre un mécanisme (12 ; 46 ; 120 ; 144, 150 ; 176, 178) de commande de pression servant à commander le vide fourni audit dispositif de travail afin que ledit vide atteigne une valeur prédéterminée.

3. Dispositif servant à assurer une aspiration selon la revendication 2, dans lequel une vanne de commande directionnelle, servant à fournir et supprimer ledit vide, et ledit mécanisme de commande de pression sont formés comme une unité monobloc.

4. Dispositif servant à assurer une aspiration selon la revendication 2 ou 3, dans lequel ladite source de vide comprend un éjecteur (52) et ledit mécanisme de commande de pression comprend un moyen servant à régler la pression d'un fluide sous pression envoyé audit éjecteur.

5. Dispositif servant à assurer une aspiration selon la revendication 1, dans lequel ledit dispositif de limitation comprend une valve d'étranglement ($S_1$) placée dans ledit passage pour définir ainsi un premier passage pour fluide (119) sur un premier côté de ladite valve d'étranglement ($S_1$) et un deuxième passage pour fluide (120) de l'autre côté de ladite valve d'étranglement ($S_1$), ledit capteur de pression comprenant :

- un premier circuit transducteur (112) servant à convertir la pression d'un fluide dans ledit premier passage pour fluide (119) en un signal électrique,
- un deuxième circuit transducteur (114) servant à convertir la pression du fluide dans ledit deuxième passage pour fluide (121) en un signal électrique, et
- un circuit (120) d'émission d'écart, couplé électriquement aux sorties desdits premier et deuxième circuits transducteurs (112, 114) afin de délivrer un écart entre le signal de sortie A dudit premier circuit transducteur (112) et le signal de sortie B dudit deuxième circuit transducteur (114).

6. Dispositif servant à assurer une aspiration selon la revendication 5, dans lequel ledit circuit (120) d'émission d'écart comporte un circuit d'impédance comprenant des résistances variables $R_1$ et $R_2$ pour délivrer une fraction fixe soit dudit signal de sortie A, soit dudit signal de sortie B.

7. Dispositif servant à assurer une aspiration selon la revendication 1, dans lequel ledit dispositif de limitation comprend une valve d'étranglement ($S_1$) placée dans ledit passage pour définir ainsi un premier passage pour fluide (123) sur un premier côté de ladite valve d'étranglement ($S_1$) et un deuxième passage pour fluide (125) de l'autre côté de ladite valve d'étranglement ($S_1$), ledit capteur de pression comprenant :

- un premier circuit transducteur (136) servant à convenir la pression d'un fluide dans ledit premier passage pour fluide (123) en un signal électrique,
- un deuxième circuit transducteur (138) servant à convertir une pression qui correspond à la différence entre une pression A dans ledit premier passage pour fluide (123) et une pression B dans ledit deuxième passage pour fluide (125) en un signal électrique,
- un circuit de calcul arithmétique (144) qui reçoit un signal de sortie $P_A$ dudit premier circuit transducteur (136) et un signal de sortie ($P_B$-$P_A$) dudit deuxième circuit transducteur (138) et effectue une opération arithmétique sur $P_A + (P_B - P_A)$, et
- un circuit (150) d'émission d'écart, couplé électriquement aux sorties dudit premier circuit transducteur (136) et dudit circuit de calcul arithmétique (144) afin de délivrer un écart entre le signal de sortie $P_A$ dudit premier circuit transducteur (112) et le signal de sortie $P_B$ dudit circuit de calcul arithmétique (144).

8. Dispositif servant à assurer une aspiration selon la revendication 7, dans lequel ledit premier passage pour fluide (123) communique avec une source (134) de production de vide et ledit deuxième passage pour fluide (125) communique avec un dispositif d'aspiration ($S_2$).

9. Dispositif servant à assurer une aspiration selon la revendication 7, dans lequel ledit premier passage pour fluide (123) communique avec un dispositif d'aspiration ($S_2$) et ledit deuxième passage pour fluide communique avec une source (134) de production de vide.

10. Dispositif servant à assurer une aspiration selon la revendication 1, dans lequel ledit dispositif de limitation comprend une valve d'étranglement ($S_1$) placée dans ledit passage pour définir ainsi un premier passage pour fluide (164) sur un premier côté de ladite valve d'étranglement ($S_1$) et un deuxième passage pour fluide (166) de l'autre côté de ladite valve d'étranglement ($S_1$), ledit capteur de pression comprenant :

- un premier circuit transducteur (168) servant à convertir la pression d'un fluide dans ledit premier passage pour fluide (164) en un signal électrique,
- un deuxième circuit transducteur (170) servant à convertir la pression du fluide dans ledit deuxième passage pour fluide (166) en un signal électrique,
- un troisième circuit transducteur (178) servant à convertir la pression atmosphérique en un signal électrique, et
- un moyen de calcul arithmétique (176) couplé électriquement aux sorties desdits premier à troisième circuits transducteurs (168, 170, 178) pour recevoir un signal de sortie A dudit premier circuit transducteur (168), un signal de sortie B dudit deuxième circuit transducteur (170) et un signal de sortie C dudit troisième circuit transducteur (178), et effectuer une opération arithmétique sur le débit du fluide passant par ladite valve d'étranglement ($S_1$), en fonction d'une caractéristique de débit prédéfinie de ladite valve d'étranglement ($S_1$).

11. Procédé de définition de valeurs de pression permettant d'assurer une aspiration, qui comprend les étapes consistant à :

- décider, en fonction d'un premier débit de fluide $Q_1$ et d'une première pression d'aspiration $P_1$ obtenue à partir dudit premier débit $Q_1$, une première valeur de pression $V_1$ servant à déterminer si un état d'aspiration a été obtenu,
- diviser ladite première pression d'aspiration $P_1$ en deux valeurs c et d avec ladite première valeur de pression $V_1$,
- décider d'une deuxième pression d'aspiration $P_2$ en fonction d'un deuxième débit $Q_2$, obtenue après que ledit premier débit $Q_1$ a été modifié en ledit deuxième débit $Q_2$, et
- décider d'une deuxième valeur de pression $V_2$ en fonction du rapport des valeurs c sur d obtenues dans ladite étape de division.

12. Procédé de définition de valeurs de pression permettant d'assurer une aspiration, qui comprend les étapes consistant à :

- décider, en fonction d'une première pression d'aspiration $P_1$ d'un fluide et d'un premier débit $Q_1$, obtenu à partir de ladite première pression d'aspiration $P_1$, une première valeur de pression $V_1$ servant à déterminer si un état d'aspiration a été obtenu,
- diviser ledit premier débit $Q_1$ en deux valeurs c et d avec ladite première valeur de pression $V_1$,
- décider d'un deuxième débit $Q_2$ en fonction d'une deuxième pression d'aspiration $P_2$,

obtenu après que ladite première pression d'aspiration $P_1$ a été modifiée en ladite deuxième pression d'aspiration $P_2$, et

- décider d'une deuxième valeur de pression $V_2$ en fonction du rapport des valeurs c sur d obtenues dans ladite étape de division.

13. Procédé selon la revendication 11 ou 12, dans lequel ladite première valeur de pression $V_1$ et ladite deuxième valeur de pression $V_2$ sont déterminées entre une courbe $S_1$ caractéristique d'aspiration et une courbe $S_2$ caractéristique de non-aspiration.

# FIG.1

VACUUM GENERATING SOURCE — 1

3

5 — 4

2

# FIG.2

VACUUM PRESSURE P

UPON SUCTION A

UPON NON-SUCTION B

INCREASE IN INTAKE CAPABILITY

$P_3$
$P_4$
$P_1$

$P_2$

DECREASE IN INTAKE CAPABILITY

INTAKE FLOW RATE Q

16

# FIG.3

VACUUM PRESSURE P

UPON SUCTION

UPON NON-SUCTION

u

Px

w

Py

INTAKE FLOW RATE Q

# FIG. 4

# FIG.5

EP 0 603 396 B1

# FIG.6

VACUUM GENERATING SOURCE — 1

5 — 3

10

M
4

2

# FIG.7

VACUUM PRESSURE P

UPON SUCTION A

UPON NON-SUCTION B

P3
P4
P5

ABSENCE OF RESTRICTOR 10

P6

PRESENCE OF RESTRICTOR 10

INTAKE FLOW RATE

19

# FIG. 8

# FIG. 9

VACUUM GENERATING SOURCE — 1

12

26

30

3b

28

16

20

22

24

3a

5

10

4

14

18

2

# FIG.10

VACUUM PRESSURE P

UPON SUCTION A

VARIATION IN SUPPLIED VACUUM PRESSURE

$P_8$
$P_9$

$P_{10}$

ABSENCE OF RESTRICTOR 10

UPON NON-SUCTION B

PRESENCE OF RESTRICTOR 10

INTAKE FLOW RATE

# FIG.11

12a  1a

3

5  10

4

2

22

# FIG.12

# FIG.13

COMPRESSED AIR →

DISPLAY DEVICE →

CONTROLLER

# FIG.14

VACUUM PRESSURE P

SUCTION CHARACTERISTIC CURVE S₁

NON-SUCTION CHARACTERISTIC CURVE S₂

INTAKE FLOW RATE Q

## FIG.15

110

| Block | Number |
|---|---|
| FIRST PRESSURE TRANSDUCER | 112 |
| FIRST PRESSURE TYPE VOLTAGE GENERATOR | 116 |
| SECOND PRESSURE TRANSDUCER | 114 |
| SECOND PRESSURE TYPE VOLTAGE GENERATOR | 118 |
| VOLTAGE DIFFERENCE DETECTOR | 120 |

OUTPUT SIGNAL

$V_A$  $V_B$  $V_C$  $R_1$  $R_2$  $P_A$  $P_B$  $S_1$  $S_2$  $W$

119  121  122

# FIG.16

FIG.17

# FIG.18

DIFFERENTIAL-PRESSURE SIGNAL ($P_C - P_D$)

ELECTRIC SIGNAL CORRESPONDING TO $P_D$

OUTPUT SIGNAL

EP 0 603 396 B1

# FIG.19

EP 0 603 396 B1

# FIG.20

FLOW RATE Q

VARIATIONS IN $P_c$

DIFFERENTIAL PRESSURES $P_c$, $P_0$